# EUROPÄISCHE PATENTSCHRIFT

(11) **EP 1 051 901 B1**
(45) Veröffentlichungstag und Bekanntmachung des Hinweises auf die Patenterteilung: **20.08.2003**
(21) Anmeldenummer: 00109305.3
(22) Anmeldetag: 29.04.2000
(51) Int. Cl.: A01D 78/10

(54) **Heuwerbungsmaschine**
Haymaking machine
Machine de fenaison

(30) Priorität: 11.05.1999 DE 19921666
(43) Veröffentlichungstag der Anmeldung: 15.11.2000
(73) Patentinhaber: Maschinenfabrik Bernard Krone GmbH, 48480 Spelle (DE)
(72) Erfinder: Krone, Bernard, Dr. E.h., 48480 Spelle (DE); Leifeling, Karl, 48477 Hörstel - Bevergern (DE)

(56) Entgegenhaltungen:
- EP-A- 0 270 052
- EP-A- 0 385 899
- EP-A- 0 534 127
- DE-A- 4 110 634
- DE-A- 4 200 690
- FR-A- 2 558 332
- US-A- 4 342 367

## Beschreibung

Die Erfindung betrifft eine Heuwerbungsmaschine gemäß dem Oberbegriff des Patentanspruchs 1.

Es sind Heuwerbungsmaschinen bekannt, die sechs und mehr Kreiselrechen oder dgl. Arbeitswerkzeuge aufweisen. Bei diesen Maschinen sind zwei Kreiselrechen an einem Mittelträger um zumindest in etwa vertikal ausgerichtete Achsen dreh- und antreibbar gelagert und alle weiteren Kreiselrechen sind Seitenträgern zugeordnet, die im Sinne einer guten Bodenanpassung der Arbeitswerkzeuge und der Erreichung einer Transportstellung um in Fahrtrichtung ausgerichtete Achsen relativ zueinander verschwenkbar sind.

Eine solche, bereits bekannte Heuwerbungsmaschine ist in der EP 0 385 899 B1 beschrieben ist und weist einen Tragrahmen auf, der aus einem, zwei Kreiselrechen tragenden Mittelsegment und aus zwei, beidseitig vom Mittelsegment angebrachten, jeweils drei Teile mit je einem Kreiselrechen umfassenden Seitensegmenten gebildet ist. Um eine solche Heuwerbungsmaschine aus der Arbeits- und Betriebsstellung, in der diese eine große, quer zur Fahrtrichtung sich erstreckende Arbeitsbreite einnimmt, in eine Transportstellung mit einer für den Straßenverkehr zulässigen Maschinenbreite überführen zu können, sind die einen Kreiselrechen tragenden Teile eines Seitensegmentes um in Fahrtrichtung gerichtete Achsen relativ zueinander schwenkbar miteinander verbunden. Wie aus der EP 0 385 899 B1 hervorgeht, können die einzelnen Teile der Seitensegmente bei der Überführung aus der Arbeits- und Betriebsstellung in die Transportstellung aus einer quer zur Fahrtrichtung gerichteten Strecklage in eine Stellung gebracht werden, in der die einzelnen Teile eines jeden Seitensegmentes (eine Maschinenseite) die Form eines umgekehrten U einnehmen. Eine solche Transportstellung ist durch die Anbringung von Lenkstangen an dem inneren und an dem äußeren Teil eines jeden Seitensegmentes erreichbar, wobei die drei Teile der Seitensegmente und die Lenkstangen die Form eines fünfgliedrigen Drehgelenkgetriebes aufweisen, welches über einen Druckmittelantrieb je Maschinenseite bedienbar ist. Da hier alle Teile der Seitensegmente auch in der Transportstellung in einer Ebene verbleiben, ergibt sich zwangsläufig eine große Transportbreite. Um diesem Nachteil entgegenzuwirken, wurde bei der Maschine nach der EP 0 385 899 B1 der zweite oder mittlere Teil eines jeden Seitensegmentes extrem kurz gestaltet, wobei aber der zusätzliche Nachteil einer sehr schlechten Bodenanpassungsfähigkeit des an diesem Teil des Seitensegmentes gelagerten Kreiselrechens auftritt. Da hier der Abstand zwischen den in Fahrtrichtung gerichteten Schwenkachsen des zweiten oder mittleren Teiles der Seitensegmente und der zumindest in etwa vertikalen Rotationsachse des an ihm gelagerten Kreiselrechens sehr kurz ist, tritt ein wesentlich stärkeres Schrägstellen dieses Kreiselrechens beim Durchfahren von Bodenunebenheiten auf, als dies bei benachbarten Kreiselrechen der Fall ist. Weiterhin erweist es sich als nachteilig, daß bei der Überführung der drei Teile eines jeden Seitensegmentes aus der Strecklage (Arbeits- und Betriebsstellung) in die Form eines umgekehrten U (Transportstellung) und zurück keine eindeutige Führung (Zwangsführung) vorhanden ist. Das bedeutet, daß die Reihenfolge der zur Überführung aus der Arbeits- und Betriebsstellung in die Transportstellung und umgekehrt erforderlichen Einzelschritte (Schwenkbewegungen) nicht exakt gleich ist. Hieraus können Bedienungsfehler und damit verbundene Beschädigungen entstehen.

Aufgabe der Erfindung ist es daher, eine Heuwerbungsmaschine der vorstehend beschriebenen Art mit großer Arbeitsbreite zu schaffen, welche für den Transport auf der Straße in einer einfachen und funktionell zuverlässigen Art auf eine möglichst geringe Transportbreite bringbar ist, wobei Beschädigungen an den nicht oder noch nicht stillstehenden Antriebselementen der Kreiselrechen sicher vermieden werden. Außerdem soll eine optimale Anpassung der Kreiselrechen an Bodenunebenheiten gegeben sein.

Zur Lösung der gestellten Aufgabe zeichnet sich die Heuwerbungsmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 14 verwiesen.

Bei einer nach den Merkmalen der Erfindung gestalteten Heuwerbungsmaschine ist es zur Lösung der Aufgabe vorgesehen, zwischen einem inneren Seitenträger oder den zwei inneren Seitenträgern einer jeden Maschinenseite und zumindest einem weiteren sich daran anschließenden Seitenträger eine Gelenk- und Antriebseinrichtung anzuordnen, welche aus einem, die einander in Strecklage zugewandten Enden der Seitenträger verbindenden Zwischenträgerelement gebildet ist und wobei im Bereich der gelenkigen Verbindungen zwischen dem Zwischenträgerelement und den Seitenträgern eine erste Verzahnung zur Steuerung der Schwenkbewegung zwischen dem Zwischenträgerelement und dem jeweiligen Seitenträger wirksam ist, der eine die Schwenkbewegung der am Zwischenträgerelement angelenkten Seitenträger unter einander steuernde, weitere Verzahnung zugeordnet ist. Das bedeutet, daß durch die Verzahnung im Bereich der gelenkigen Verbindung die jeweiligen Seitenträger und das Zwischenträgerelement während der Schwenkbewegung miteinander im Eingriff stehen, während eine weitere, aus Verzahnungssegmenten gebildete Verzahnung vorgesehen ist, um eine Abhängigkeit der Schwenkbewegung der zwei an ein Zwischenträgerelement sich anschließenden Seitenträger herzustellen. Durch diese Abhängigkeit wird bei der Überführung der Heuwerbungsmaschine aus der Arbeits- und Betriebsstellung (Strecklage der Gelenk- und Antriebseinrichtung) in eine Transportstellung eine gleichmäßige Veränderung der Winkelstellung der zwei über das Zwischenträgerelement miteinander verbundenen Seitenträger in Bezug zu dem Zwischenträgerelement erreicht. Daraus ergibt sich ein funktionell sicheres Überführen der Heuwerbungsmaschine aus der Arbeits- und Betriebsstellung in eine Transportstellung und zurück, wobei die Breite der Heuwerbungsmaschine in der Transportstellung auf ein Minimum beschränkt ist. Eine Verwendung von extrem kurz ausgebildeten und dadurch mit dem Nachteil einer schlechten Anpassungsfähigkeit an Bodenunebenheiten behafteten Seitenträgern zur Erreichung geringer Abmessungen in der Transportstellung, wie dies an bisherigen Heuwerbungsmaschinen vorgesehen war, ist hier nicht erforderlich.

In einer vorteilhaften Ausbildung der Erfindung ist es vorgesehen, daß die, der im Bereich der gelenkigen Verbindung zwischen einem Zwischenträgerelement und einem Seitenträger wirksamen ersten Verzahnung zugeordnete Verzahnung aus Verzahnungssegmenten gebildet ist, über die die am Zwischenträgerelement und den einander zugewandten Enden zweier Seitenträger angebrachten Verzahnungssegmente miteinander verbunden sind. Dazu sind an Verzahnungssegmenten im Bereich der gelenkigen Verbindung zwischen dem Zwischenträgerelement und den jeweiligen Seitenträgern Zapfen vorgesehen, auf denen die Verzahnungssegmente der zugeordneten Verzahnung drehbar gelagert sind. Über Zahnkranzabschnitte an den dem Zwischenträgerelement zugewandten Enden der Verzahnungssegmente der zugeordneten Verzahnung wird die zur funktionell sicheren Überführung der Heuwerbungsmaschine aus der Arbeits- und Betriebsstellung erforderliche Abhängigkeit hergestellt, wobei die Zahnkranzabschnitte an den Verzahnungssegmenten der zugeordneten Verzahnung so angebracht sind, daß die erreichbaren Schwenkwinkel zweier über die erfindungsgemäße Gelenk- und Antriebseinrichtung miteinander verbundener Seitenträger in Bezug zu einem Zwischenträgerelement gleich groß sind. Daraus ergibt sich eine einfache und mit niedrigem Aufwand herzustellende Ausführungsform. Es ist aber ebenso möglich, die Schwenkwinkel in ihrer Größe unterschiedlich groß auszubilden, so daß beispielsweise die Stützräder der äußeren Kreiselrechens in der Transportstellung übereinander liegen und somit die Transportbreite der Heuwerbungsmaschine noch weiter reduziert werden kann. Eine konstruktiv einfache und somit kostengünstige Ausführungsform der erfindungsgemäßen Gelenkund Antriebseinrichtung ergibt sich aus einer unlösbaren, beispielsweise durch Schweißen hergestellte Verbindung zwischen den dem jeweiligen Seitenträger zugeordneten Verzahnungssegmenten und den Seitenträgern. Ebenso kann es im Rahmen der Erfindung aber auch vorgesehen sein, die dem jeweiligen Seitenträger zugeordneten Verzahnungssegmente so auszuführen, daß diese lösbar, beispielsweise über eine flanschähnliche Schraubverbindung mit den Seitenträgern verbindbar bzw. schnell und einfach montierbar sind und somit die Gelenk- und Antriebseinrichtung eine Kompaktbaugruppe darstellt, welche innerhalb eines Fertigungsprozesses mit geringem arbeitstechnischem Aufwand zwischen zwei Seitenträgern anbringbar ist.

Zur Übertragung des Antriebsdrehmomentes sind innerhalb der erfindungsgemäßen Gelenk- und Antriebsvorrichtung zwei Doppelkreuzgelenke vorgesehen, welche über eine in dem Zwischenträgerelement gelagerte Verbindungswelle miteinander verbunden sind. Die Beugungswinkel der jeweiligen Doppelkreuzgelenke werden dabei in vorteilhafter Weise von den Verzahnungssegmenten der im Bereich der gelenkigen Verbindung zwischen dem Zwischenträgerelement und den Seitenträgern wirksamen ersten Verzahnung so gesteuert, daß das Auftreten von Beschleunigungskräften, welche an den Doppelkreuzgelenken bei unterschiedlichen Beugungswinkeln zu Beschädigungen führen können, sicher vermieden wird.

Gemäß einem weiteren vorteilhaften Aspekt der Erfindung ist zur Einleitung der Überführung der Heuwerbungsmaschine aus der Arbeits- und Betriebstellung in die Transportstellung lediglich eine hydraulische Kolben-Zylinder-Anordnung je Maschinenseite erforderlich, welche von einer Halterung am Mittelträger ausgeht und beispielsweise über eine Verlängerungsstange auf das Zwischenträgerelement der Gelenk- und Antriebseinrichtung einwirkt. Vorstellbar ist es aber auch, daß die hydraulischen Kolben-Zylinder-Anordnungen oder dgl. Stellglieder an den Verzahnungssegmenten der zugeordneten Verzahnung angelenkt sind.

Eine detaillierte Beschreibung des Gegenstandes der Erfindung erfolgt nun anhand eines Ausführungsbeispieles. In der Zeichnung stellt im einzelnen dar:
- Fig.1: eine Rückansicht einer erfindungsgemäßen Heuwerbungsmaschine in einer Darstellung der rechten Maschinenseite in Transportstellung und der linken Maschinenseite in Arbeits- und Betriebsstellung (ein gestrichelt dargestellter, äußerer Teilabschnitt der linken Maschinenseite befindet sich ebenfalls in der Transportstellung);
- Fig.2: eine vergrößerte, teilweise abgebrochene Darstellung der Einzelheit A in Fig.1;
- Fig.3: eine Schnittdarstellung der erfindungsgemäßen Gelenk- und Antriebseinrichtung in Strecklage (Arbeits- und Betriebsstellung) gemäß Schnitt III - III in Fig.2;
- Fig.4: eine Schnittdarstellung der Gelenk- und Antriebseinrichtung in Strecklage (Arbeits- und Betriebsstellung) gemäß Schnitt IV - IV in Fig.3;
- Fig.5: eine Schnittdarstellung der Gelenk- und Antriebseinrichtung in Strecklage (Arbeits- und Betriebsstellung) gemäß Schnitt V - V in Fig.3;
- Fig.6: eine vergrößerte, teilweise abgebrochene Darstellung der Einzelheit B in Fig.1;
- Fig.7: eine Schnittdarstellung der Gelenk- und Antriebseinrichtung in der Transportstellung gemäß Schnitt IV - IV in Fig.3;
- Fig.8: eine Schnittdarstellung der Gelenk- und Antriebseinrichtung in der Transportstellung gemäß Schnitt V - V in Fig.3;

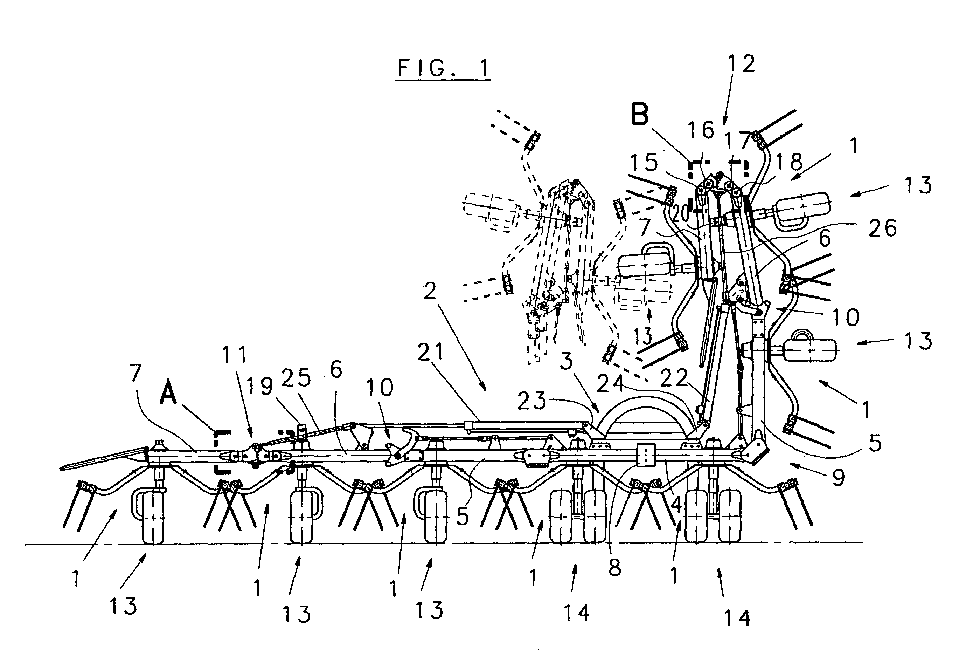

In Fig. 1 ist eine erfindungsgemäße Heuwerbungsmaschine mit acht Kreiselrechen 1 näher veranschaulicht, die über einen Querträger 2 und einen Anbaurahmen 3 mit der Dreipunkthubvorrichtung einer nicht dargestellten landwirtschaftlichen Zug- und Antriebsmaschine koppelbar ist, wobei der Querträger 2 aus einem mit zwei Kreiselrechen 1 bestückten Mittelträger 4 gebildet ist, an den sich zu beiden Seiten hin Seitenträger 5,6,7 anschließen. Der Mittelträger 4 besteht aus einem kastenförmigen Hohlprofil und erstreckt sich von einem mittig verschraubten, in Fig. 1 angedeuteten Verteilergetriebe 8 beidseitig quer zur Fahrt- und Arbeitsrichtung (eine in die Zeichnungsebene der Fig.1 weisende Richtungsangabe) nach außen. Das Verteilergetriebe 8 ist über eine nicht dargestellte Gelenkwelle mit der Zapfwelle einer Zugund Antriebsmaschine verbindbar, so daß darüber ein Antrieb der Heuwerbungsmaschine erfolgen kann. Am Mittelträger 4 ist beidseitig von Verteilergetriebe 8 jeweils ein Kreiselrechen 1 bekannter Bauweise drehbar gelagert. Diese Kreiselrechen 1 werden über Kegelradgetriebe und mit dem Verteilergetriebe 8 verbundene im Mittelträger 4 gelegene Antriebswellen angetrieben.

An den beiden äußeren Enden des Mittelträgers 4 schließen sich, jeweils einen Kreiselrechen 1 abstützende Seitenträger 5,6 an, wobei die inneren Seitenträger 5 über eine gelenkige Rahmenverbindung 9 gemäß einer eigenen älteren DE 41 10 634 C2 schwenkbeweglich mit dem Mittelträger 4 verbunden sind und die Seitenträger 6 ihrerseits über eine, eine begrenzte Schwenkbewegung zulassende Gelenkverbindung 10 an dem äußeren Ende der Seitenträger 5 angelenkt sind. Die Seitenträger 5,6 bestehen ebenfalls aus einem kastenförmigem Hohlprofil und erstrecken sich in der Arbeits- und Betriebsstellung quer zur Fahrt- und Arbeitsrichtung fluchtend zum Mittelträger 4 (Strecklage). Am äußeren Ende des Seitenträgers 6 jeder Maschinenseite schließt sich im dargestellten Ausführungsbeispiel ein weiterer, mit einem Kreiselrechen 1 versehener Seitenträger 7 an, wobei zur Verbindung der beiden Seitenträger 6,7 erfindungsgemäß eine Gelenk- und Antriebseinrichtung 11,12 vorgesehen ist, auf die nachfolgend noch näher eingegangen wird. Wie aus der Fig.1 weiterhin hervorgeht, werden die an den Seitenträgern 5,6,7 abgestützten Kreiselrechen 1 in der Arbeits- und Betriebsstellung von je einem Stützrad 13 gegenüber dem Erdboden abgestützt, während für die dem Mittelträger 4 zugeordneten Kreiselrechen 1 Doppelstützräder 14 vorgesehen sind.

Zur Überführung der Heuwerbungsmaschine aus der Arbeits- und Betriebsstellung (Fig.1 - linke Maschinenseite) in die Transportstellung (Fig.1 - rechte Maschinenseite) ist es vorgesehen, daß die Seitenträger 5,6 jeder Maschinenseite aus der horizontalen und quer zur Fahrt- und Arbeitsrichtung ausgerichteten Stellung in eine ausgehend von der gelenkigen Rahmenverbindung 9 nach oben zeigende Stellung verschwenkt werden, während der Seitenträger 7 mit dem daran angebrachten Kreiselrechen 1 ausgehend von der zwischen den Seitenträgern 6,7 befindlichen Gelenk- und Antriebseinrichtung 11,12 eine nach unten hängende Position einnimmt. Der dazu erforderliche Ablauf sieht vor, daß der äußere Seitenträger 7 zunächst um in Fahrt- und Arbeitsrichtung gerichtete Achsen 15,16,17,18 der Gelenk- und Antriebseinrichtung 11,12 soweit verschwenkt, bis der Seitenträger 7 oberhalb vom Seitenträger 6 an einem Anschlag 19,20 anliegt. Erst dann erfolgt durch eine Schwenkbewegung der Seitenträger 5,6 um eine ebenfalls in Fahrt- und Arbeitsrichtung weisende Achse der gelenkigen Rahmenverbindung 9 die Überführung der Seitenträger 5,6,7 in die Transportstellung. Zur Einleitung der Überführung der Heuwerbungsmaschine aus der Arbeits- und Betriebsstellung in die Transportstellung und umgekehrt ist an jeder Maschinenseite eine hydraulische Kolben-Zylinder-Anordnung 21,22 vorgesehen, welche an Halterungen 23,24 am Mittelträger 4 angelenkt sind und sich über Verlängerungsstangen 25,26 zu den Gelenk- und Antriebseinrichtungen 11,12 erstrecken.

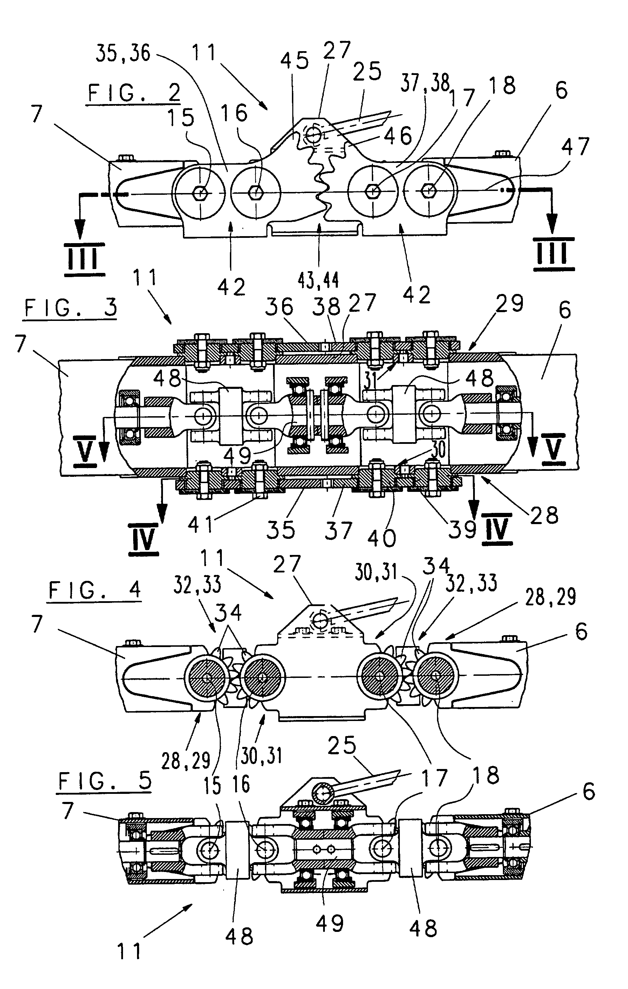

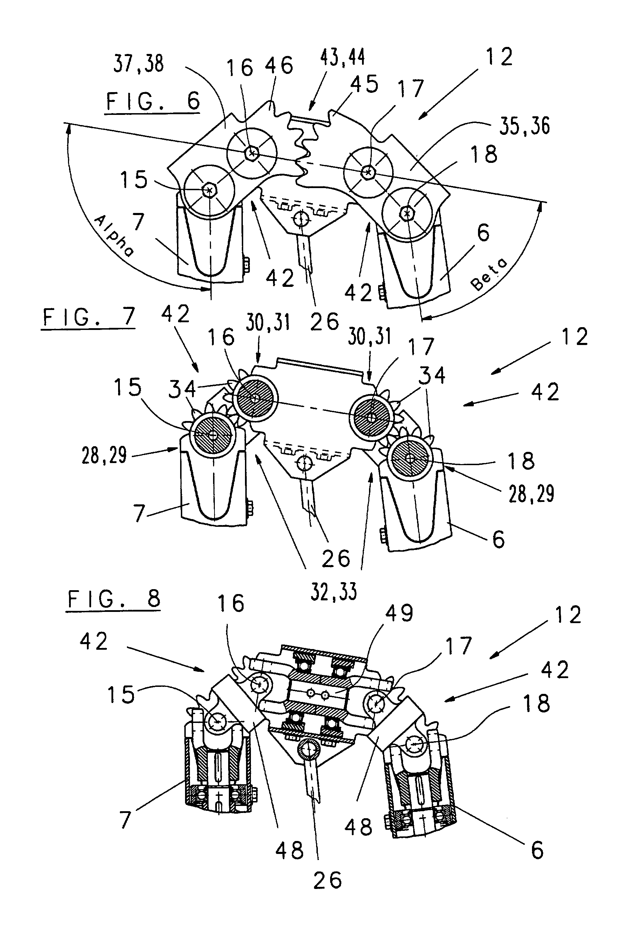

In den Fig. 2 bis 5 ist eine erfindungsgemäße Ausführungsform einer Gelenk- und Antriebseinrichtung 11,12 in der Arbeits- und Betriebsstellung näher veranschaulicht, während in den Fig. 6 bis 8 eine Darstellung der Gelenk- und Antriebseinrichtung 11,12 in der Transportstellung wiedergegeben ist. Wie aus diesen Figuren hervorgeht, umfaßt eine Gelenk- und Antriebseinrichtung 11,12 im wesentlichen ein Zwischenträgerelement 27, welches zwischen den in der Strecklage (Fig. 2 bis 5) einander zugewandten Enden zweier Seitenträger 6,7 angeordnet ist. Sowohl an den Enden des Zwischenträgerelementes 27 als auch an den Enden der Seitenträger 6,7 befinden sich Verzahnungssegmente 28,29,30,31, die eine erste Verzahnung 32,33 (Fig.4 und 7) bilden und zentrisch zu den Achsen 15,16,17,18 angeordnete Zahnkranzabschnitte 34 umfassen. Um die Verzahnungssegmente 28,29 der Seitenträger 6,7 und die Verzahnungssegmente 30,31 des Zwischenträgerelementes 27 miteinander zu verbinden, sind weitere Verzahnunssegmente 35,36,37,38 vorgesehen, die Aufnahmebohrungen 39 aufweisen, in denen zentrisch zu den Achsen 15,16,17,18 an den Verzahnungssegmenten 28,29,30,31 angebrachte Aufnahmezapfen 40 drehbar gelagert sind. Zur Arretierung der Verzahnungssegmente 35,36,37,38 auf den Aufnahmezapfen 40 sind Schraubverbindungen 41 vorgesehen (siehe Fig.3). Durch die vorstehend beschriebene Ausbildung der Gelenk- und Antriebseinrichtung 11,12 wird im Bereich zwischen dem Zwischenträgerelement 27 und den Seitenträgern 6,7 eine gelenkige Verbindung 42 geschaffen. Wie aus den Fig. 2 und 6 weiterhin zu entnehmen ist, sind die Verzahnungssegmente 35,36,37,38, welche eine der ersten Verzahnung 32,33 zugeordnete weitere Verzahnung 43,44 bilden, mit einem Zahnkranzabschnitt 45,46 bestückt, dessen Teilkreisdurchmesser zentrisch zu den Achsen 16,17 angeordnet ist. Die Lage der Zahnkranzabschnitte 45,46 in Bezug zu einer in Fig.2 dargestellten Mittelebene 47 ist so gewählt, daß maximale Schwenkwinkel Alpha,Beta, welche in der Transportstellung zwischen den Seitenträgern 6,7 und dem Zwischenträgerelement 27 auftreten, entweder gleich groß ausgebildet sind oder eine voneinander verschiedene Größe aufweisen. Durch unterschiedlich große Schwenkwinkel Alpha,Beta ist eine weitere Verringerung der Transportbreite erreichbar, da dann in der Transportstellung die Tasträder 13 der äußeren Kreiselrechen 1 übereinander angeordnet sind.

Wie insbesondere aus den Fig. 3,5,8 ersichtlich ist, sind innerhalb der Gelenk- und Antriebseinrichtung 11,12 Doppelkreuzgelenke 48 angebracht, die mittels einer Verbindungswelle 49 miteinander gekoppelt sind, wobei die Verbindungswelle 49 innerhalb des Zwischenträgerelementes 27 gelagert ist.

Abweichend und/oder ergänzend zu den vorstehenden Ausführungen können die Verzahnungen 32,33 bzw. deren Verzahnungssegmente 28,29,30,31 so ausgebildet sein, wie es in der DE 41 10 634 C2 offenbart ist. Insbesondere ist dabei die Verbindung zwischen den Verzahnungsegementen 28,29 und den Seitenträgern 6,7 zu sehen, die entweder unlösbar (Schweißverbindung) oder lösbar beispielsweise als eine schraubbare, flanschähnliche Verbindung ausgeführt ist, so daß dann die Gelenk- und Antriebseinrichtung 11,12 als eine schnell und einfach montierbare Kompaktbaugruppe ausgebildet werden kann.

Wie bereits erwähnt, ist zur Einleitung der Überführung der Heuwerbungsmaschine aus der Arbeits- und Betriebsstellung in die Transportstellung lediglich eine hydraulische Kolben-Zylinder-Anordnung 21, 22 je Maschinenseite erforderlich, welche von einer Halterung 23,24 am Mittelträger 4 ausgeht und beispielsweise über eine Verlängerungsstange 25,26 auf das Zwischenträgerelement 27 der Gelenk- und Antriebseinrichtung 11,12 einwirkt. Vorstellbar ist es aber auch, daß die hydraulischen Kolben-Zylinder-Anordnungen 21,22 oder dgl. Stellglieder an den Verzahnungssegmenten 35,36 oder 37,38 der zugeordneten Verzahnung 43,44 angelenkt sind.

## Patentansprüche

1. Heuwerbungsmaschine, insbesondere eine Maschine zum Zetten und Wenden von landwirtschaftlichem Erntegut mit einem zumindest sechs um Hochachsen drehbare Kreiselrechen (1) abstützenden Querträger (2), der aus einem an einen landwirtschaftlichen Traktor oder dgl. Zug- und Antriebsmaschine anhäng- oder anbaubaren Mittelträger (4) mit zwei Kreiselrechen (1) sowie aus weiteren gelenkig untereinander und mit dem Mittelträger (4) verbundenen Seitenträgern (5,6,7) gebildet ist, wobei die Seitenträger (5,6,7) mit den an ihnen abgestützten und über innerhalb der Mittel- bzw. Seitenträger untergebrachten Antriebswellen antreibbaren Kreiselrechen (1) aus einer quer zur Fahrt- und Arbeitsrichtung gerichteten Strecklage in eine die Maschinenbreite verringernde Lage überführbar sind, in der zumindest die inneren Seitenträger (5) ausgehend von ihrer Anlenkung am Mittelträger (4) bezüglich ihrer größten Ausdehnung eine in etwa nach oben zeigende Stellung und zumindest die äußeren Seitenträger (7) ausgehend von ihrer Anlenkung an einem benachbarten Seitenträger eine nach unten hängende Stellung einnehmen, **dadurch gekennzeichnet, daß** zwischen dem inneren Seitenträger (5) oder den zwei inneren Seitenträgern (5,6) jeder Maschinenseite und dem/den sich daran anschließenden weiteren Seitenträger/Seitenträgern (7) eine Gelenk- und Antriebseinrichtung (11,12) angeordnet ist, welche ein die einander in Strecklage zugewandten Enden zweier benachbarter Seitenträger (6,7) um parallel zueinander ausgerichtete und in einem Abstand von einander angeordnete Achsen (15,16,17,18) gelenkig verbindendes Zwischenträgerelement (27) umfaßt, wobei im Bereich der gelenkigen Verbindung (42) zwischen dem Zwischenträgerelement (27) und den jeweiligen Seitenträgern (6,7) eine aus Verzahnungssegmenten (28,29,30,31) gebildete erste Verzahnung (32,33) wirksam ist, der eine weitere, die Schwenkbeweglichkeit der Seitenträger (6,7) untereinander steuernde Verzahnung (43,44) zugeordnet ist.

2. Heuwerbungsmaschine nach Anspruch 1, **dadurch gekennzeichnet, daß** die, der im Bereich der gelenkigen Verbindung (42) wirksamen ersten Verzahnung (32,33) zugeordnete Verzahnung (43,44) so mit den Verzahnungselementen (28,29,30,31) der ersten Verzahnung (32,33) im Bereich der gelenkigen Verbindung (42) verbunden ist, daß bei einer Überführung der Gelenk- und Antriebseinrichtung (11,12) aus der Arbeits- und Betriebsstellung in die Transportstellung und umgekehrt während der gesamten Schwenkbewegung um die Achsen (15,16,17,18) eine gleichmäßige Veränderung der Schwenkwinkel (Alpha,Beta) erreichbar ist.

3. Heuwerbungsmaschine nach Anspruch 1 und 2, **dadurch gekennzeichnet, daß** die, der im Bereich der gelenkigen Verbindung (42) wirksamen ersten Verzahnung (32,33) zugeordnete Verzahnung (43,44) aus Zahnsegmenten (35,36,37,38) gebildet ist, über die die dem Zwischenträgerelement (27) zugeordneten Zahnsegmente (30,31) und die an dem jeweiligen Seitenträger (6,7) angebrachten Zahnsegmente (28,29) miteinander verbunden sind.

4. Heuwerbungsmaschine nach einem der Ansprüche 1 bis 3, **dadurch gekennzeichnet, daß** die Zahnsegmente (35,36,37,38) der zugeordneten Verzahnung (43,44) auf Aufnahmezapfen (40) der Zahnsegmente (28,29,30,31) drehbar gelagert sind.

5. Heuwerbungsmaschine nach einem der Ansprüche 1 bis 4, **dadurch gekennzeichnet, daß** die Zahnsegmente (35,36,37,38) der zugeordneten Verzahnung (43,44) an dem dem Zwischenträgerelement (27) zugewandten Ende einen Zahnkranzabschnitt (45,46) aufweisen.

6. Heuwerbungsmaschine nach einem der Ansprüche 1 bis 5, **dadurch gekennzeichnet, daß** die Zahnkranzabschnitte (45,46) an den Zahnsegmenten (35,36,37,38) der zugeordneten Verzahnung (43,44) so angeordnet sind, daß die maximal erreichbaren Schwenkwinkel (Alpha,Beta) gleich groß sind.

7. Heuwerbungsmaschine nach einem der Ansprüche 1 bis 5, **dadurch gekennzeichnet, daß** die Zahnkranzabschnitte (45,46) an den Zahnsegmenten (35,36,37,38) der zugeordneten Verzahnung (43,44) so angeordnet sind, daß die maximal erreichbaren Schwenkwinkel (Alpha,Beta) unterschiedlich groß sind.

8. Heuwerbungsmaschine nach einem der Ansprüche 1 bis 7, **dadurch gekennzeichnet, daß** innerhalb der Gelenk- und Antriebseinrichtung (11,12) zwei Doppelkreuzgelenke (48) untergebracht sind, welche über eine in dem Zwischenträgerelement (27) drehbar gelagerte Verbindungswelle (49) miteinander verbunden sind.

9. Heuwerbungsmaschine nach einem der Ansprüche 1 bis 8, **dadurch gekennzeichnet, daß** die an den Enden der Seitenträger (6,7) angeordneten Zahnsegmente (28,29) der ersten Verzahnung (32,33) unlösbar mit den Seitenträgern (6,7) verbunden sind.

10. Heuwerbungsmaschine nach einem der Ansprüche 1 bis 8, **dadurch gekennzeichnet, daß** die an den Enden der Seitenträger (6,7) angeordneten Zahnsegmente (28,29) der ersten Verzahnung (32,33) lösbar mit den Seitenträgern (6,7) verbunden sind.

11. Heuwerbungsmaschine nach Anspruch 10, **dadurch gekennzeichnet, daß** zur Verbindung der Zahnsegmente (28,29) mit den Seitenträgern (6,7) eine flanschähnliche Schraubverbindung vorgesehen ist.

12. Heuwerbungsmaschine nach Anspruch 10 und 11, **dadurch gekennzeichnet, daß** die Gelenk- und Antriebseinrichtung (11,12) als eine Kompaktbaugruppe ausgebildet ist.

13. Heuwerbungsmaschine nach einem der Ansprüche 1 bis 12, **dadurch gekennzeichnet, daß** zur Überführung der Seitenträger (5,6,7) jeder Maschinenseite aus der Arbeits- und Betriebsstellung in die Transportstellung hydraulische Kolben-Zylinder-Anordnungen (21,22) vorgesehen sind, welche sich von Halterungen (23,24) am Mittelträger (4) über Verlängerungsstangen (25,26) zu den Zwischenträgerelementen (27) erstrecken.

14. Heuwerbungsmaschine nach einem der Ansprüche 1 bis 12, **dadurch gekennzeichnet, daß** die hydraulischen Kolben-Zylinder-Anordnungen (21,22) ausgehend von den Halterungen (23,24) am Mittelträger (4) mit oder ohne Verlängerungsstangen an den untereinander verbundenen Zahnsegmenten (35,36 oder 37,38) angelenkt sind.

## Claims

1. Haymaking machine, in particular a machine for tedding and turning agricultural harvested crops with transverse support (2) which supports at least six rotary rakes (1) that are rotatable about vertical axes and which is formed from a central support (4) with two rotary rakes (1) capable of being towed by or mounted on an agricultural tractor or similar towing and driving machine, and from further lateral supports (5, 6, 7) articulated together and connected to the central support (4), wherein the lateral supports (5, 6, 7) can be transferred with the rotary rakes (1) supported on them and driven by drive shafts housed inside the central and lateral supports, from an extended position directed transversely to the travel and working direction to a position that reduces the machine width, in which position at least the inner lateral supports (5) assume an approximately upwardly directed position relative to their maximum extension, starting from their articulation to the central support (4), and in which at least the outer lateral supports (7) assume a downwardly suspended position starting from their articulation to an adjacent lateral support, **characterised in that** an articulated and driving device (11, 12) is arranged between the inner lateral support (5) or the two inner lateral supports (5, 6) on each machine side and the connecting further lateral support/s (7), which device comprises an intermediate support element (27) connecting by articulation the ends of two adjacent lateral supports (6, 7), facing each other in the extended position, about axes (15, 16, 17, 18) aligned parallel with each other and arranged at a certain distance from each other, wherein a first gearing (32, 33) formed from gearing elements (28, 29, 30, 31) in the region of the articulated connection (42) between the intermediate support element (27) and the corresponding lateral supports (6, 7), to which further gearing (43, 44) controlling the mutual swivel movement of the lateral supports (6, 7) is assigned.

2. Haymaking machine according to claim 1, **characterised in that** the gearing (43, 44) assigned to the first gearing (32, 33) acting in the area of the articulated connection (42) is connected to the gearing elements (28, 29, 30, 31) of the first gearing (32, 33) in the area of the articulated connection (42) so that when the articulated and driving device (11, 12) is transferred from the working and operating position to the transport position, and vice versa, a uniform variation of the angle of swivel (alpha, beta) can be achieved throughout the swivel movement about the axes (15, 16, 17, 18).

3. Haymaking machine according to claim 1 and 2, **characterised in that** the gearing (43, 44) assigned to the first gearing (32, 33) acting in the area of the articulated connection (42) is formed from tooth segments (35, 36, 37, 38) by which the tooth segments (30, 31) assigned to the intermediate support element (27) and the tooth segments (28, 29) mounted on the associated lateral support (6, 7) are connected together.

4. Haymaking machine according to one of claims 1 to 3, **characterised in that** the tooth segments (35, 36, 37, 38) of the assigned gearing (43, 44) are rotatably mounted on receiving pins (40) of the tooth segments (28, 28, 30, 31).

5. Haymaking machine according to one of claims 1 to 4, **characterised in that** the tooth segments (35, 36, 37, 38) of the assigned gearing (43, 44) exhibit a gear rim section (45, 46) at the end facing the intermediate support element (27).

6. Haymaking machine according to one of claims 1 to 5, **characterised in that** the gear rim sections (45, 46) are arranged on the tooth segments (35, 36, 37, 38) of the assigned gearing (43, 44) so that the maximum attainable angles of swivel (alpha, beta) are of equal value.

7. Haymaking machine according to one of claims 1 to 5, **characterised in that** the gear rim sections (45, 46) are arranged on the tooth segments (35, 36, 37, 38) of the assigned gearing (43, 44) so that the maximum attainable swivel angles (alpha, beta) are of different values.

8. Haymaking machine according to one of claims 1 to 7, **characterised in that** two double universal joints (48) are housed inside the articulated and driving device (11, 12), which joints are connected to each other by means of a connecting shaft (49) pivoted in the intermediate support element (27).

9. Haymaking machine according to one of claims 1 to 8, **characterised in that** the tooth segments (28, 29) of the first gearing (32, 33) arranged at the ends of the lateral supports (6, 7) are connected undetachably to the lateral supports (6, 7).

10. Haymaking machine according to one of claims 1 to 8, **characterised in that** the tooth segments (28, 29) of the first gearing (32, 33) arranged at the ends of the lateral supports (6, 7) are detachably connected to the lateral supports (6, 7).

11. Haymaking machine according to claim 10, **characterised in that** a screw connection similar to a flange is provided for connecting the tooth segments (28, 29) to the lateral supports (6, 7).

12. Haymaking machine according to claim 10 and 11, **characterised in that** the articulated and driving device (11, 12) is designed as a compact unit.

13. Haymaking machine according to one of the claims 1 to 12, **characterised in that** hydraulic piston-cylinder arrangements (21, 22) are provided for transferring the lateral supports (5, 6, 7) on each side of the machine from the working and operating position to the transport position, which arrangements extend from supports (23, 24) on the central support (4) via extension rods (25, 26) to the intermediate support elements (27).

14. Haymaking machine according to one of claims 1 to 12, **characterised in that** the hydraulic piston-cylinder arrangements (21, 22) are articulated to the interconnected tooth segments (35, 36 or 37, 38) starting from the supports (23, 24) on the central support (4) with or without extension rods.

## Revendications

1. Machine de fenaison, notamment machine pour étaler et retourner des produits agricoles de récolte, comportant un bras transversal (2) portant au moins six roues racleuses (1) tournant autour d'axes verticaux, ce bras se composant d'une poutre centrale (4) accrochée ou attelée à un tracteur agricole ou véhicule de traction ou d'entraînement analogue, cette poutre centrale (4) comportant deux roues racleuses (1), le bras comportant également d'autres poutres latérales (5, 6, 7) reliées de manière articulée entre elles et à la poutre centrale (4), dans laquelle les poutres latérales (5, 6, 7) avec les roues racleuses (1) qu'elles portent et qui sont entraînées par des arbres d'entraînement logés dans la poutre centrale et les poutres latérales, peuvent être déplacées d'une position étendue dirigée transversalement à la direction de déplacement et de travail dans une position réduisant la largeur de la machine, dans laquelle au moins les poutres latérales intérieures (5), partant de leur articulation sur la poutre centrale (4), par rapport à leur plus grande extension, prennent une position sensiblement tournée vers le haut et au moins les poutres latérales extérieures (7), partant de leur position étendue, prennent une position suspendue vers le bas par rapport à une poutre latérale voisine,
**caractérisée en ce qu'**
entre la poutre latérale intérieure (5) ou les deux poutres latérales intérieures (5, 6) de chaque côté de la machine et la ou les poutres latérales (7), adjacentes, il y a une installation d'articulation et d'entraînement (11, 12), qui comprend un élément de poutre intermédiaire (27) reliant de manière articulée les extrémités tournées l'une vers l'autre en position d'extension, de deux poutres latérales adjacentes (6, 7), autour d'axes (15, 16, 17, 18) parallèles et écartés,
et dans la zone de la liaison articulée (42), entre l'élément de poutre intermédiaire (27) et la poutre latérale respective (6, 7), il est prévu une première denture (32, 33) formée de segments dentés (28, 29, 30, 31) et à laquelle est associée une autre denture (43, 44) commandant la mobilité en pivotement des poutres latérales (6, 7) entre elles.

2. Machine de fenaison selon la revendication 1,
**caractérisée en ce que**
la denture (43, 44), associée à la première denture (32, 33) agissant au niveau de la liaison articulée (42), est reliée aux éléments de denture (28, 29, 30, 31) de la première denture (32, 33) au niveau de la liaison articulée (42) pour que lorsqu'on fait passer l'installation d'articulation et d'entraînement (11, 12) de sa position de travail et de fonctionnement dans sa position de transport et inversement, au cours de tout le mouvement de basculement autour des axes (15, 16, 17, 18) on réalise une variation régulière des angles de basculement (alpha, bêta).

3. Machine de fenaison selon les revendications 1 et 2,
**caractérisée en ce que**
la denture (43, 44) associée à la première denture (32, 33) agissant au niveau de la liaison articulée (42) se compose de segments dentés (35, 36, 37, 38) par lesquels sont reliés les segments dentés (30, 31) associés à l'élément de poutre intermédiaire (27) et les segments dentés (28, 29) prévus sur la poutre latérale respective (6, 7).

4. Machine de fenaison selon l'une des revendications 1 à 3,
**caractérisée en ce que**
les segments dentés (35, 36, 37, 38) de la denture associée (43, 44) sont montés à rotation sur des tourillons (40) des segments dentés (28, 29, 30, 31).

5. Machine de fenaison selon l'une des revendications 1 à 4,
**caractérisée en ce que**
les segments dentés (35, 36, 37, 38) de la denture correspondante (43, 44) présentent un segment de couronne denté (45, 46) à l'extrémité tournée vers l'élément de support intermédiaire (27).

6. Machine de fenaison selon l'une des revendications 1 à 5,
**caractérisée en ce que**
les segments de couronne dentés (45, 46) sont prévus sur les segments dentés (35, 36, 37, 38) de la denture correspondante (43, 44) pour que les angles de basculement (alpha, bêta) maximum possibles soient égaux.

7. Machine de fenaison selon l'une des revendications 1 à 5,
**caractérisée en ce que**
les segments de couronne dentés (45, 46) sont prévus sur les segments dentés (35, 36, 37, 38) de la denture correspondante (43, 44) pour que les angles de basculement (alpha, bêta) maximum possibles soient différents.

8. Machine de fenaison selon l'une des revendications 1 à 7,
**caractérisée par**
deux articulations à double cardan (48) logées dans l'installation d'articulation et d'entraînement (11, 12), ces articulations à double cardan étant reliées par un arbre de liaison (49) monté à rotation dans l'élément de poutre intermédiaire (27).

9. Machine de fenaison selon l'une des revendications 1 à 8,
**caractérisée en ce que**
les segments dentés (28, 29) de la première denture (32, 33), prévus aux extrémités des poutres latérales (6, 7), sont reliés de manière solidaire aux poutres latérales (6, 7).

10. Machine de fenaison selon l'une des revendications 1 à 8,
**caractérisée en ce que**
les segments dentés (28, 29), prévus aux extrémités des poutres latérales (6, 7), et appartenant à la première denture (32, 33), sont reliés de manière amovible aux poutres latérales (6, 7).

11. Machine de fenaison selon la revendication 10,
**caractérisée par**
une liaison à vis analogue à une liaison par bride pour relier les segments dentés (28, 29) aux poutres latérales (6, 7).

12. Machine de fenaison selon les revendications 10 et 11,
**caractérisée en ce que**
l'installation d'articulation et d'entraînement (11, 12) est réalisée sous la forme d'un ensemble compact.

13. Machine de fenaison selon les revendications 1 à 12,
**caractérisée par**
des dispositifs à pistons-cylindres hydrauliques (21, 22) pour faire passer les poutres latérales (5, 6, 7) de chaque côté de la machine de sa position de travail et de fonctionnement dans sa position de transport, ces dispositifs hydrauliques s'étendant de supports (23, 24) de la poutre centrale (4) par des tiges de prolongement (25, 26) jusqu'au niveau des éléments de poutre intermédiaire (27).

14. Machine de fenaison selon les revendications 1 à 12,
**caractérisée en ce que**
les dispositifs pistons-cylindres hydrauliques (21, 22) sont articulés à partir des supports (23, 24) de la poutre centrale (4) avec ou sans tige de prolongement aux segments dentés (35, 36) ou (37, 38) reliés entre eux.
